# EUROPÄISCHE PATENTSCHRIFT

(11) **EP 2 056 940 B1**
(45) Veröffentlichungstag und Bekanntmachung des Hinweises auf die Patenterteilung: **09.12.2009**
(21) Anmeldenummer: 07802010.4
(22) Anmeldetag: 30.08.2007
(51) Int. Cl.: A63B 22/02, B65G 17/34

(54) **VORRICHTUNG MIT EINER IN ZWEI RAUMRICHTUNGEN BEWEGBAREN OBERFLÄCHE**
DEVICE HAVING A SURFACE DISPLACEABLE IN TWO SPATIAL DIRECTIONS
DISPOSITIF AVEC UNE SURFACE POUVANT ÊTRE DÉPLACÉE DANS DEUX DIRECTIONS SPATIALES

(30) Priorität: 30.08.2006 DE 102006040485
(43) Veröffentlichungstag der Anmeldung: 13.05.2009
(73) Patentinhaber: Technische Universität München, 80333 München (DE)
(72) Erfinder: SCHWAIGER, Martin, 85368 Moosburg (DE); THÜMMEL, Thomas, 85395 Attenkirchen (DE); ULBRICH, Heinz, 81929 München (DE)
(74) Vertreter: Schlotter, Alexander Carolus Paul
(86) Internationale Anmeldenummer: PCT/EP2007/007591
(87) Internationale Veröffentlichungsnummer: WO 2008/025550

(56) Entgegenhaltungen:
- EP-A- 1 153 860
- GB-A- 2 311 976
- GB-A- 2 345 864
- US-A- 6 152 854
- US-B1- 6 669 012

## Beschreibung

Die vorliegende Erfindung betrifft eine Vorrichtung mit einer in zwei Raumrichtungen bewegbaren Oberfläche.

Herkömmliche Laufbänder weisen eine Oberfläche auf, die in einer Raumrichtung, meist parallel zum oder leicht gegen den Boden geneigt, bewegbar ist, so dass ein Jogger sich relativ zu dieser Oberfläche vorwärtsbewegen, gleichwohl inertial im wesentlichen ruhen kann. Hiermit ist es möglich, sich gleichsam ohne Ortsveränderung beliebig lange Strecken vorwärts bzw. rückwärts zu bewegen. Vertikale, z.T. mit künstlichen Griffen versehene Laufbänder gestatten analog ein Klettern in die Höhe. In beiden Fällen läuft ein Endlosband in einer Raumrichtung um, so dass die Oberseite des Obertrums (in der Regel das Lasttrum) die gewünschte, in dieser Raumrichtung bewegbare Oberfläche bildet. Nachteilig kann hier jedoch nur eine Relativbewegung mit einem Freiheitsgrad realisiert werden, i.e. der Anwender kann sich nur in dieser Raumrichtung relativ zur Oberfläche vor- oder zurückbewegen.

Daher schlägt die EP 0 948 377 B1 ein omnidirektionales Laufband vor, dessen Oberfläche sich in zwei unabhängige Raumrichtungen bewegen kann. Mit einem solchen Laufband kann, wie die Druckschrift als bevorzugte Anwendung vorschlägt, insbesondere eine künstliche Umgebung ("Virtual Reality" VR) realisiert werden. Dabei bewegt sich der Besucher relativ zur Oberfläche beliebig in den beiden Raumrichtungen, ohne seine inertiale Lage zum umgebenden Raum wesentlich zu verändern. Koppelt man ein visuelles System wie beispielsweise eine VR-Brille oder umgebende VR-Monitore so mit dem System, dass sich die darin dargestellte Umgebung entsprechend der Bewegung des Laufbandes verändert, so kann dem Anwender das subjektive Gefühl vermittelt werden, sich in dieser Umgebung zu bewegen.

In diesem Zusammenhang sein explizit darauf hingewiesen, dass sich die vorliegenden Erfindung im Gegensatz zur EP 0 948 377 B1 nicht auf Raumrichtungen beschränkt, die im wesentlichen senkrecht zur Richtung der Gravitation stehen, also im wesentlichen parallel zum Boden. Sie umfasst gleichermaßen beispielsweise eine im wesentlichen vertikale Oberfläche, die sowohl vertikal als auch horizontal bewegbar ist und somit beispielsweise ein Klettern in die Höhe und zur Seite simulieren kann.

Die EP 0 948 377 B1 realisiert die Bewegung in den beiden Raumrichtungen in einer ersten Variante dadurch, dass ein Endlosband in einer ersten Raumrichtung umläuft. Das Endlosband umfasst Einzelkörper, insbesondere Zylinder oder Kugeln, die sich um eine zur ersten Raumrichtung parallele Achse drehen können, so dass sich an ihrem obersten Umfangspunkt eine Relativgeschwindigkeit in einer zweiten, zur ersten Raumrichtung senkrechten Raumrichtung ergibt. Die Drehung der Einzelkörper wird über einen Reibkontakt mit einem zweiten Endlosband vermittelt, welches unter dem ersten Endlosband senkrecht zu dessen Umlaufrichtung umläuft und auf dem die Einzelkörper unter Reibung abrollen. Nachteilig liegt in dem Kontaktpunkt zwischen Einzelkörper und zweitem Endlosband sogenannte Bohrreibung vor, da der Einzelköper in der ersten Raumrichtung über das in der zweiten Raumrichtung dahineilende zweite Endlosband gezogen wird, also gleichzeitig eine Relativgeschwindigkeit in der ersten und zweiten Raumrichtung aufweist.

In einer zweiten Variante schlägt die EP 0 948 377 B1 vor, die Einzelkörper durch Bandeinheiten in Form einzelner, nebeneinander angeordneter Endlosbänder zu ersetzen, die jeweils in der zweiten Raumrichtung umlaufen. Die Bewegung in der zweiten Raumrichtung wird den einzelnen Bandeinheiten durch Rollen vermittelt, deren Drehachse parallel zur ersten Bewegungsrichtung ausgerichtet ist und über die die einzelnen Endlosbänder unter Reibkontakt hinweggezogen werden. Auch hier tritt nachteilig zwischen der Außenseite des Untertrums eines einzelnen Endlosbandes und den Rollen Bohrreibung auf, da die Bandeinheiten sich relativ zu den Rollen sowohl in der ersten als auch der zweiten Raumrichtung bewegen.

Diese Bohrreibung erhöht den Verschleiß und begrenzt die übertragbaren Antriebskräfte. Sie limitiert damit nachteilig die erreichbaren Bewegungsgeschwindigkeiten, die Reaktionszeiten und die Nutzlasten.

Daher ist aus der US 6,669,012 B1 eine Vorrichtung mit einer Mehrzahl von Bandeinheiten bekannt, die durch zwei Förderketten in einer ersten Raumrichtung bewegt werden. Jede Bandeinheit umfasst ein erstes Endlosband, welches an der Bandeinheit in einer zweiten Richtung umlaufend angeordnet ist und durch einen Servomotor aktuiert wird. Die Unterbringung des Servomotors sowie der mit ihm verbundenen Steuer- und Übersetzungseinrichtungen bedingt eine erhebliche Bautiefe der einzelnen Bandeinheiten in der zur ersten und zweiten senkrechten Raumrichtung. Beim Umlaufen der Umlenkrollen der Förderketten kippen die einzelnen Bandeinheiten um eine zur zweiten Raumrichtung parallele Achse. Hierzu müssen aufgrund der genannten Bauhöhe der einzelnen Bandeinheiten zwischen zwei benachbarten Bandeinheiten erhebliche Spalte vorhanden sein.

Alternativ schlägt daher die US 6,123,647 vor, eine oder beide Rollen, über die die Endlosbänder der einzelnen Bandeinheiten umlaufen (i.e. Rollen, deren Drehachse während der Ober- und Untertrumphase parallel zur ersten Bewegungsrichtung ist), mittels eines Ritzels anzutreiben, welches in je eine Zahnstange eingreift, wenn die einzelne Bandeinheit in der Obertrumphase ist. Die Drehachsen von Ritzel und Zahnstangen liegen parallel zur ersten Bewegungsrichtung, ihre Verzahnung am Umfang in der Ebene der zweiten Bewegungsrichtung. Da hier die Drehbewegung der einzelnen Endlosbänder in der zweiten Bewegungsrichtung nicht mehr reib-, sondern formschlüssig über Ritzel und Zahnstange vermittelt wird, kann die oben erwähnte Bohrreibung vermindert werden.

Die beide Rollen, über die die Endlosbänder der einzelnen Bandeinheiten umlaufen, sind an je einem Förderband festgelegt, das in der ersten Bewegungsrichtung zwischen je zwei Treibscheiben umläuft. Beim Umlaufen der Treibscheiben kippen die Ritzel um eine zur zweiten Bewegungsrichtung parallele Drehachse. Daher müssen nachteilig auch hier zwischen den einzelnen Bandeinheiten Zwischenräume in der Größenordnung der doppelten Ritzelweite vorgesehen werden. Will man vorteilhaft eine geschlossene Oberfläche realisieren, so schlägt die US 6,123,647 hierzu vor, die Ritzel benachbarter Bandeinheiten in der dritten, zur ersten und zweiten Raumrichtung senkrechten Raumrichtung gegeneinander zu versetzen. Hierdurch kann das einzelne Ritzel beim Ein- und Auslauf aus der Treibscheibe ungestört verkippen. Dies erfordert auf der anderer Seite jedoch nachteilig eine zweite Zahnstange, so dass die Ritzel benachbarter Bandeinheiten alternierend in die erste bzw. zweite Zahnstange eingreifen.

Die aus der US 6,123,647 bekannte Vorrichtung weist einige Nachteile auf: so müssen die Ritzel zu Beginn der Obertrumphase, i.e. wenn eine Bandeinheit aus der Umlenkung einer Treibscheibe ausläuft und die Oberseite seines Endlosbandes Teil der nutzbaren Oberfläche wird, in Eingriff mit den Zahnstangen gebracht werden. Dies erfordert eine aufwändige Synchronisierung der Ritzel- auf die Zahnstangendrehzahl. Umgekehrt müssen sie zunächst außer Eingriff mit den Zahnstangen gesetzt werden, bevor sie in die andere Treibscheibe einlaufen und durch diese in die Untertrumphase umgesetzt werden. Sowohl, wenn die Ritzel in bzw. außer Eingriff mit der Zahnstange gelangen, als auch während des Ein- und Auslaufs in die bzw. aus der Treibscheibe treten Stöße auf, die die gleichmäßige Bewegung der Oberfläche stören und zudem die Komponenten, insbesondere den Antriebsstrang, erheblich belasten.

Ausgehend hiervon ist es die Aufgabe der vorliegenden Erfindung, eine Vorrichtung mit einer in zwei Raumrichtungen bewegbaren Oberfläche zur Verfügung zu stellen, die die oben genannten Nachteile im Stand der Technik vermeidet.

Hierzu ist erfindungsgemäß eine Vorrichtung nach dem Oberbegriff des Anspruchs 1 durch dessen kennzeichnende Merkmale weitergebildet.

Eine gattungsgemäße Vorrichtung mit einer in zwei Raumrichtungen bewegbaren Oberfläche umfasst einen Tragrahmen, ein Fördermittel, welches an dem Tragrahmen in einer ersten Richtung umlaufend angeordnet ist, und eine Mehrzahl von Bandeinheiten, wobei jede Bandeinheit am Fördermittel derart befestigbar ist, dass sie als Ganzes in der ersten Richtung bewegbar ist. Jede Bandeinheit umfasst ein erstes Endlosband, welches an der Bandeinheit in einer zweiten Richtung umlaufend angeordnet ist, und eine erste Antriebsrolle zum Antreiben des ersten Endlosbandes in der zweiten Richtung. Bevorzugt stehen die erste und zweite Richtung im wesentlichen senkrecht zueinander.

Jede erste Antriebsrolle wird mittels eines eigenen Antriebs aktuiert. Um Spalte zwischen den aufeinanderfolgenden einzelnen Bandeinheiten möglichst gering zu halten und gleichzeitig ein Verkippen der Bandeinheiten bei der Umlenkung zu ermöglichen, weist erfindungsgemäß jede Bandeinheit weiter wenigstens ein zweites Endlosband auf, welches an der Bandeinheit parallel zum ersten Endlosband angeordnet ist. Das zweite Endlosband kann in einer Richtung senkrecht zur Förderrichtung des Fördermittels und senkrecht zur Umlaufrichtung des ersten bzw. zweiten Endlosbandes flacher ausgebildet sein als das erste Endlosband so dass die Spalte zwischen aufeinander folgenden Bandeinheiten, die notwendig sind, um die Unterkanten der Bandeinheiten an einander vorbei schwenken zu können, reduziert werden kann. In jeder Bandeinheit kann ein zweites Endlosband auf einer Seite des ersten Endlosbandes der Bandeinheit angeordnet sein. Gleichermaßen können auf jeder Seite des ersten Endlosbandes je ein oder mehrere zweite Endlosbänder vorgesehen sein.

Das zweite Endlosband kann durch eine zweite Antriebsrolle oder durch die erste Antriebsrolle zum Antreiben des ersten Endlosbandes in der zweiten Richtung angetrieben werden.

Wie aus der US 6,123,647 bekannt, muss zwischen Bandeinheiten, die in der ersten Richtung umlaufen und in dieser Richtung eine endliche Ausdehnung aufweisen, ein gewisser Mindestabstand freigehalten werden, der ein Verkippen der Bandeinheiten währen der Umlenkung an den Treibrädem gestattet. Erfindungsgemäß umfasst hierzu bei einer erfindungsgemäßen Vorrichtung jede Bandeinheit das zweite Endlosband, welches an der Bandeinheit parallel zum ersten Endlosband angeordnet ist wobei das erste und zweite Endlosband dieselbe Umlaufgeschwindigkeit aufweisen.

Im Gegensatz zur US 6,123,647 muss hier also keine zweite Zahnstange vorgesehen werden. Die Aktuierung beider Antriebsrollen über denselben Antrieb stellt sicher, dass beide Endlosbänder dieselbe Umlaufgeschwindigkeit aufweisen, so dass sich ein homogenes Geschwindigkeitsfeld der Oberfläche ergibt.

Die ersten und/oder zweiten Antriebsrollen können bevorzugt zylinderförmig ausgebildet sein, aber gleichermaßen beispielsweise auch einen Polygonquerschnitt aufweisen.

Bevorzugt sind die ersten und zweiten Endlosbänder so ausgebildet, dass sie bei nebeneinander liegenden Bandeinheiten eine im wesentlichen geschlossene Oberfläche bilden. Vorteilhaft kann dabei das zweite Endlosband etwas kürzer und/oder flacher sein, so dass Raum für entsprechende Getriebe, etwa in Form von Ketten, Zahnrädern oder Zahnriemen, zwischen dem Antrieb und den Antriebsrollen verbleibt. Insbesondere kann die zweite Antriebsrolle einen kleineren Durchmesser als die erste Antriebsrolle aufweisen, so dass unter dem zweiten Endlosband ein freier Raum ausgebildet ist, in dem Abstützungen, Leitungen, Mechanismen, Sensoren oder dergleichen angeordnet werden können, ohne dabei die Spaltbreite zwischen zwei Bandeinheiten verändern zu müssen.

Durch eine erfindungsgemäße Vorrichtung werden auch die anderen vorstehend erläuterten Nachteile beseitigt. Da die Endlosbänder nicht über Reibkontakt wie in der EP 0 948 377 B1 aktuiert werden, entfällt die dort auftretende Bohrreibung, was den damit einhergehenden Verschleiß vermindert und auch die Übertragung großer Antriebsleistungen gestattet. Dementsprechend können auch große, in zwei Raumrichtungen bewegbare Oberflächen realisiert werden, die einer hierauf befindlichen Personen einen großen Aktionsradius, insbesondere ausgreifende Schritte oder dergleichen ermöglichen.

Im Vergleich zur US 6,123,647 gelangen keine Verzahnungen in bzw. außer Eingriff, so dass die dabei auftretenden Ein- und Auslaufstöße vermieden und die Bewegung der Oberfläche gleichmäßiger wird. Zudem werden die mit Verzahnungen verbundenen Probleme wie wechselnde Steifigkeiten aufgrund der unterschiedlichen Anzahl in Eingriff befindlicher Zähne sowie eine Längstorsion der Zahnstangen vermieden, die eine exakte Steuerung der Drehbewegung der Endlosbänder erschwert.

Vorteilhaft sind die separaten Antriebe in Serie geschaltet, was es ermöglicht, die notwendige Energie von einer inertial festen Quelle einem der Antriebe zuzuführen, von dem sie der Reihe nach an die übrigen Antriebe übertragen wird. Gleichzeitig ermöglicht dies auch eine homogene Steuerung aller Antriebe, so dass alle Endlosbänder in der zweiten Richtung mit gleicher Geschwindigkeit umlaufen. Dies gestattet es, die gesamte, aus den einzelnen Endlosbändern gebildete Oberfläche homogen in der zweiten Richtung zu bewegen.

In einer alternativen Ausgestaltung können die einzelnen Antriebe auch einzeln gesteuert sein, so dass sich in der zweiten Richtung auch Oberflächenbereiche mit unterschiedlichen Geschwindigkeiten realisiert werden können. Hierzu können die einzelnen Antriebe ferngesteuert sein, beispielsweise über Funk- oder IR-Signale.

Gleichermaßen können die Antriebe auch durch einen Datenbus, der bevorzugt parallel zur Energieversorgung angeordnet sein kann, angesteuert oder durch Sensoren, beispielsweise Rollhebel oder Reed-Kontakte nach dem Einlauf in die Umlenkung aus der Lasttrumphase deaktiviert und bei Auslauf aus der Umlenkung in die Lasttrumphase wieder aktiviert werden, um Energie zu sparen und unnötige dynamische Anregungen zu vermeiden. Vorteilhaft geschieht die (De)Aktivierung kontinuierlich während eines vorgegebenen Zeitraums, um Sprünge in der Energieversorgung und der Geschwindigkeit der Endlosbänder zu vermeiden. In einer bevorzugten Ausführung können dabei die Motoren auch parallel zueinander an einer gemeinsamen Energiezufuhr angeschlossen sein.

Die Antriebe der Antriebsrollen können beispielsweise Elektromotoren umfassen. In einer bevorzugten Ausführung umfassen die Antriebe Hydraulikmotoren, die mittels Hydraulikleitungen in Serie geschaltet sind. Vorteilhaft verbindet dabei je eine Hydraulikleitung zwei benachbarte Hydraulikmotoren. Hydraulikmotoren eignen sich aufgrund ihres ruhigen Laufs, ihrer Dämpfungseigenschaften und der großen Leistungen besonders für eine erfindungsgemäße Vorrichtung.

Zur Energieversorgung umfasst die Tragstruktur bevorzugt eine Linearführung, die in der ersten Richtung verschiebbar ist, und an der eine Endlos-Drehdurchführung für die Energieversorgung eines damit verbundenen Antriebs einer Antriebsrolle angeordnet ist. Falls die Antriebe Elektromotoren umfassen, kann die Linearführung mittels einer ersten Leitung mit einer inertial festen Spannungsquelle verbunden sein. Über die Endlos-Drehführung wird die elektrische Energie dann einem der Elektromotoren zugeführt, von dem sie an die hierzu in Serie geschalteten übrigen Antriebe übertragen wird. Bei der bevorzugten Ausführung mit Hydraulikmotoren ist in analoger Weise die Linearführung mit einer inertial festen Druckquelle verbunden. Der Hydraulikdruck wird über die Endlos-Drehführung in konstruktiv einfacher Weise in einen Hydraulikmotor eingespeist und von diesem an die übrigen in Serie geschalteten Motoren übertragen.

Alternativ kann die Energiezufuhr zu dem einen Antrieb auch über eine vorgespannte, einseitig inertial feste Zuleitung erfolgen, wobei die Vorspannung ein Durchhängen der Leitung verhindert. Vorteilhaft kann hierzu beispielsweise die Leitung gegen ein rückstellendes Drehmoment von einer inertial festen Trommel abgewickelt werden.

Beim Umlaufen der Bandeinheiten in der ersten Richtung schleppt der mit der Endlos-Drehführung verbundene Antrieb die Energiezufuhr unter Verschiebung der Linearführung hin und her. Während der Umlenkung der Bandeinheiten aus einer Bewegung in der ersten Richtung in die hierzu entgegengesetzte Richtung erlaubt die Endlos-Drehführung eine entsprechende Rotation dieses Antriebs. Somit kann in konstruktiv einfacher Weise allen Antrieben der Bandeinheiten Energie aus einer inertial festen Energiequelle zugeführt werden.

Vorteilhafterweise umfasst die Tragstruktur eine Stützstruktur zur Abstützung der Endlosbänder der Bandeinheiten. Dies gestattet es, auch größere Oberflächen zu realisieren, die große Lasten senkrecht zur Oberfläche aufnehmen können.

Bevorzugt ist diese Stützstruktur so ausgebildet, dass eine Verbindung zwischen der Endlosdrehdurchführung und des damit verbundenen Antriebs in der zweiten Richtung in etwa in der Mitte der zugehörigen Bandeinheit mit dieser Bandeinheit in der ersten Richtung mit umlaufen kann. Dies gestattet die Abstützung der Oberfläche über nahezu die gesamte Breite und ist besonders vorteilhaft, wenn die Lasten breit verteilt oder am Rand konzentriert sind, wie dies etwa bei mehrachsigen Radfahrzeugen der Fall ist. Gleichermaßen kann die Verbindung auch an einer anderen Stelle, beispielsweise am Rand der Oberfläche, in der ersten Richtung umlaufen, so dass die Oberfläche insbesondere im mittleren Bereich, in dem regelmäßig die Hauptlast vorliegt, abgestützt ist.

Bevorzugt umfasst das Fördermittel zwei umlaufende Ketten, welche durch je wenigstens ein Treibrad in der ersten Richtung umlaufen. Um den hierbei auftretenden Polygoneffekt zu vermeiden oder jedenfalls zu vermindern, kann vorteilhaft der Einlauf jeder Kette in das zugehörige Treibrad eine Führungsfläche zur Führung der Kette aufweisen, die im wesentlichen aus zwei linearen im wesentlichen parallelen Abschnitten, zwei, bevorzugt klotoiden, Abschnitten mit sich verändernder Steigung mit stetiger Krümmung und einem Kreissegment derart umfasst, dass die Kette aus einem ersten linearen Abschnitt, in dem sie im wesentlichen in der ersten Richtung läuft, mit stetiger Krümmung in einen ersten, bevorzugt klotoiden Abschnitt mit sich verändernder Steigung mit stetiger Krümmung und von diesem mit stetiger Krümmung in das Kreissegment übergeht, aus diesem wiederum mit stetiger Krümmung in den zweiten, wiederum bevorzugten klotoiden Abschnitt mit sich verändernder Steigung mit stetiger Krümmung und von diesem mit stetiger Krümmung in den zweiten linearen Abschnitt übergeht. Damit erfolgt die Umlenkung der einzelnen Bandeinheiten am Treibrad nahezu stoßfrei, was wiederum eine besonders gleichmäßig Bewegung ermöglicht und den mit Stößen verbundenen Verschleiß der Vorrichtung weiter vermindert. Eine Klotoide ist dabei bekanntermaßen eine Kurve, bei der sich die Krümmung linear mit ihrer Länge ändert, insbesondere eine Kurve, bei der das Produkt aus Krümmungsradius und Kurvenlänge konstant ist.

Vorteilhaft ist jede Kette durch ein erstes und ein zweites Treibrad aktuierbar, das am Anfang bzw. Ende der Strecke angeordnet ist, die die Kette umläuft. Um eine Scherbelastung der Bandeinheiten zu vermeiden, werden die ersten und/oder zweiten Treibräder beider Ketten bevorzugt jeweils winkelsynchron gesteuert, wozu insbesondere Elektromotoren geeignet sind.

Bevorzugt sind die Treibräder als Polygonrad ausgebildet, welches formschlüssig mit Bolzen der jeweiligen Kette in Eingriff treten kann. Dies ermöglicht eine spiel- und verschleißarme Aktuierung der Ketten.

Gleichermaßen kommen als Fördermittel auch Zahnriemen, Schubketten und/oder ein magnetischer Lienarantrieb in Betracht. Letzterer ermöglicht es vorteilhaft, weniger Bandeinheiten vorzusehen, da diese in der Leertrumphase schneller umlaufen können. Hierdurch ist es möglich, nur so viele Bandeinheiten vorzusehen, dass einerseits die Oberfläche gebildet werden kann und zusätzlich die aus dieser auslaufenden Bandeinheiten ersetzt werden. In erster Näherung einer Kontinuitätsgleichung kann die Anzahl der Bänder um etwa die Hälfte der Bänder, die bei vollständiger Bestückung erforderlich sind, dividiert durch die Erhöhung der Geschwindigkeit in der Leertrumphase, verringert werden. So kann bei einer Vorrichtung, bei der die Bandeinheiten durch einen magnetischen Linearantrieb in der ersten Richtung umlaufen und hierbei in der Leertrumphase mit der doppelten Geschwindigkeit zurückgefördert werden, die Bandanzahl um ein Viertel (Hälfte, dividiert durch zweifache Geschwindigkeit) gegenüber der Vollbestückung reduziert werden.

Bevorzugt kann jede Bandeinheit ein Anziehmittel umfassen, mittels dem das Endlosband zu einer Tragstruktur der Bandeinheit gezogen werden kann. Beispielsweise kann ein magnetisch reaktives Endlosband mittels eines Magneten angezogen werden. Gleichermaßen kann das Endlosband auch durch einen von einer Vakuumvorrichtung erzeugten Unterdruck an die Tragstruktur gezogen werden. Dies kompensiert vorteilhaft Querkräfte, insbesondere in der ersten Richtung, auf die Endlosbänder und gestattet so beispielsweise auch den vertikalen Einsatz als künstliche Kletterwand.

Weitere Aufgaben, Vorteile und Merkmale ergeben sich aus den Unteransprüchen und den nachfolgenden Ausführungsbeispielen. Hierzu zeigt:
- Fig. 1: eine Vorrichtung nach einer Ausführung der vorliegenden Erfindung in perspektivischer Ansicht;
- Fig. 2: die Vorrichtung aus Fig. 1 in einer stirnseitigen Frontalansicht;
- Fig. 3: die Vorrichtung aus Fig. 1 in einer seitlichen Ansicht;
- Fig. 4: eine Fig. 2 entsprechende Ansicht mit entfernten Bandeinheiten;
- Fig. 5: eine einzelne Bandeinheit in perspektivischer Teilansicht mit teilweise entferntem ersten Endlosband;
- Fig. 6: ein Treibrad mit geschnittenenen Bandeinheiten in einer schematischen perspektivischen Darstellung;
- Fig. 7: das Treibrad aus Fig. 6 in einer Seitenansicht:
- Fig. 8: den Hydraulikschaltplan eines Ventils;
- Fig. 9: ein Treibrad mit aktuierter Kette in perspektivischer Teilansicht; und
- Fig. 10: eine Linearführung mit Endlos-Drehdurchführung zur Energieversorgung.

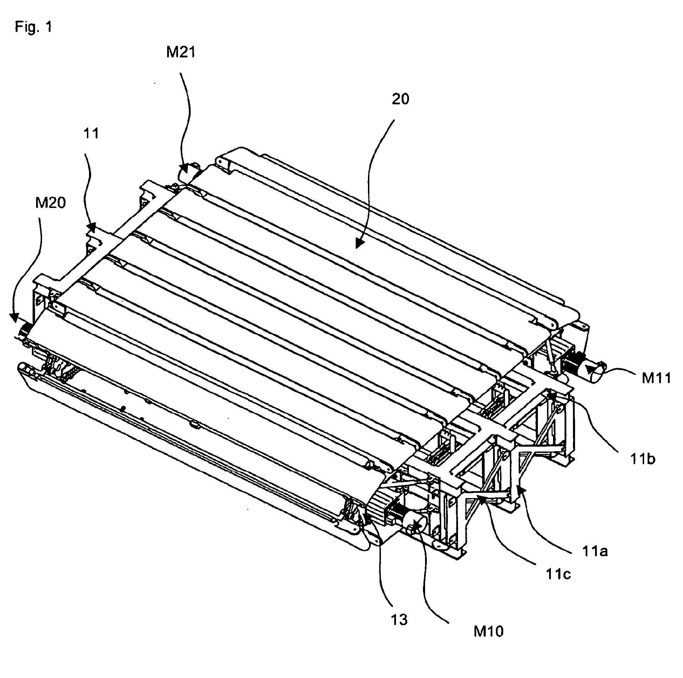

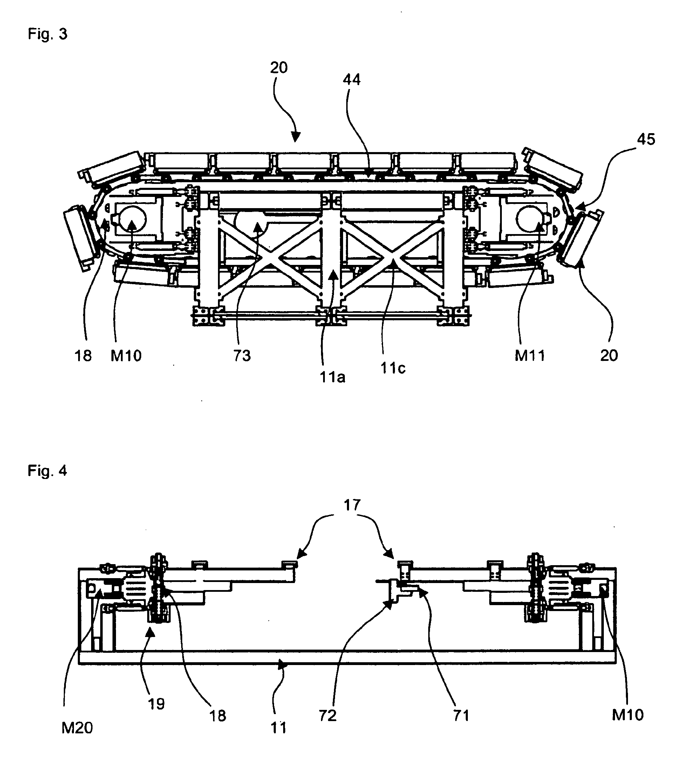

Fig. 1 zeigt eine Vorrichtung mit einer in zwei Raumrichtungen bewegbaren Oberfläche nach einer Ausführung der vorliegenden Erfindung in perspektivischer Ansicht. Die Vorrichtung umfasst einen Tragrahmen 11, der in Fig. 4 näher dargestellt ist.

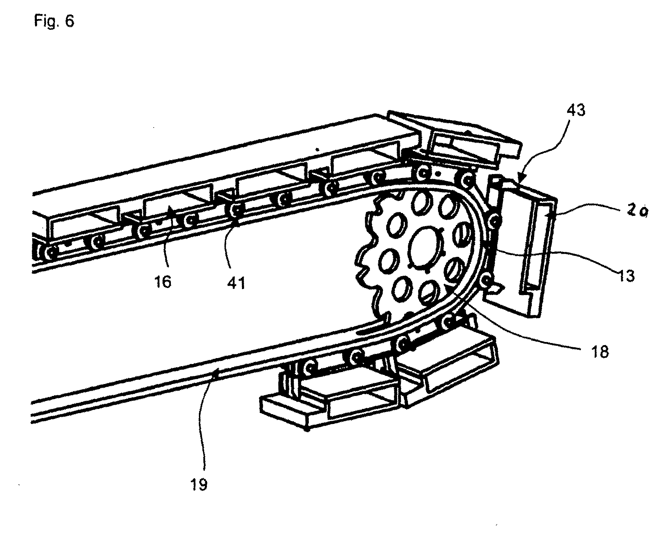

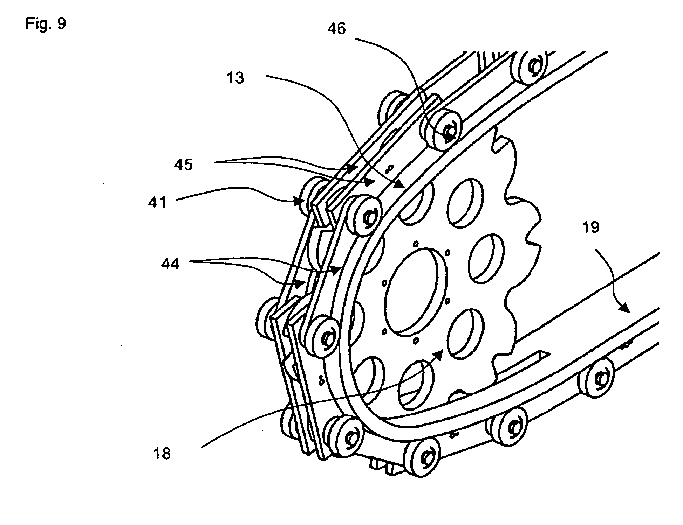

An dem Tragrahmen ist, wie in den Fign. 6, 7 und 9 erkennbar, ein Fördermittel 16 in Form zweier Gliederketten in einer ersten Richtung umlaufend angeordnet. Jede Kette umfasst in an sich bekannter Weise Innen- und Außenglieder 44, 45, welche über Bolzen 46 gelenkig miteinander verbunden sind (Fig. 9). Um die Ketten in der ersten Richtung zu bewegen, greifen in jede Kette 16 je ein erstes und ein zweites Treibrad 18 ein, das als Polygonrad ausgebildet ist und von einem ersten Elektromotor M10 bzw. M20 bzw. einem zweiten Elektromotor M11, M21 angetrieben wird. Vorteilhafterweise werden die ersten und zweiten Elektromotoren M10, M20 bzw. M11, M21 jeweils winkelsynchron gesteuert, was eine Scherbeanspruchung der Vorrichtung vermeidet. Bevorzugt ziehen die in Bewegungsrichtung vorderen Treibräder die Ketten, während die in Bewegungsrichtung hinteren Treibräder mit in etwa derselben Geschwindigkeit drehen, so dass die Ketten keine Zugkräfte zur Überwindung der Reibung dieser hinteren Treibräder und deren Elektromotoren übertragen müssen. Bei Umkehr der ersten Bewegungsrichtung tauschen die ersten und zweiten Treibräder ihre Rollen als vordere bzw. hinteren Treibräder.

Die Treibräder sind als Polygonrad ausgebildet, welches formschlüssig mit den Bolzen 46 der jeweiligen Kette in Eingriff treten kann.

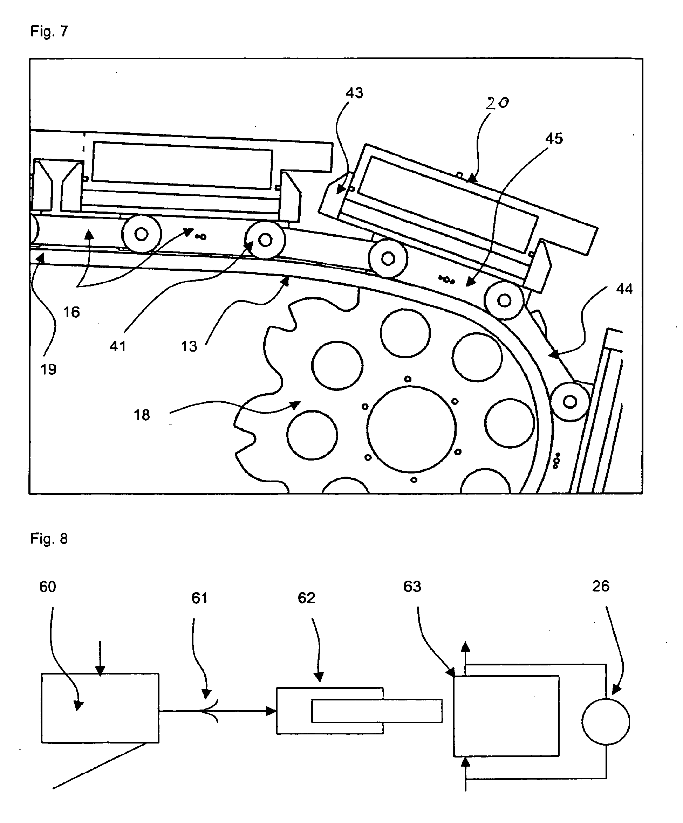

An den Ketten ist eine Mehrzahl von Bandeinheiten 20 fest oder lösbar befestigt, so dass die Bandeinheiten sich in der ersten Richtung mit den Ketten bewegen. Wie in den Fign. 6, 7 angedeutet, sind hierzu an den Kettengliedern 44, 45 Haltebügel 43 angeordnet, mit denen je eine Bandeinheit in Eingriff gebracht werden kann. Dabei sind jedwede Befestigungsmöglichkeiten denkbar, insbesondere Schrauben, Rastverbindungen, Schnappverbindungen, Spannverbindungen, Bajonett-Verschlüsse oder dergleichen. Vorteilhaft gestattet die Verbindung zwischen Bandeinheit und Fördermittel eine gewisse Drehung um eine zur ersten und zweiten Richtung im wesentlichen senkrechte Achse, um Fertigungstoleranzen und Asynchronitäten der Fördermittel auszugleichen.

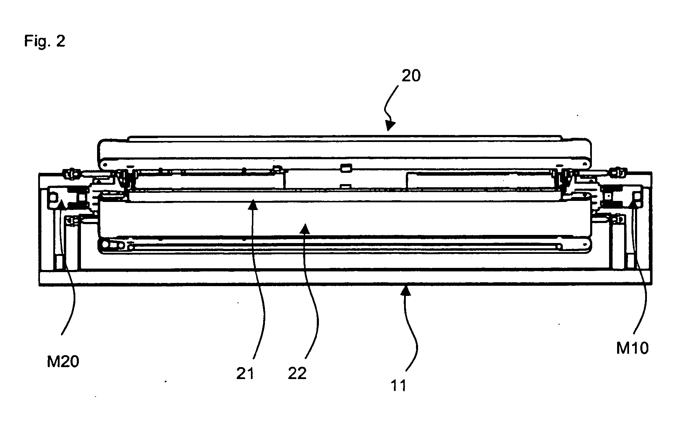

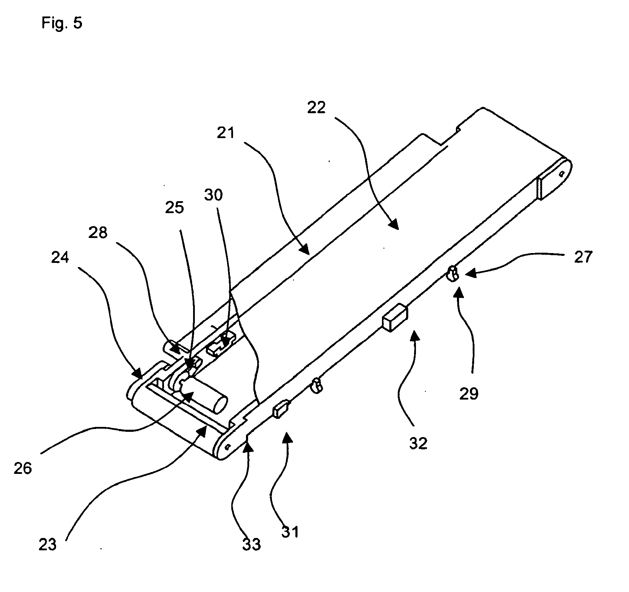

In Fig. 5 ist eine Bandeinheit 20 näher dargestellt. Sie umfasst ein erstes Endlos- oder Hauptband 22 (Fig. 2), welches in Fig. 5 teilweise ausgeblendet ist. Es läuft an der Bandeinheit in einer zweiten Richtung, die zur ersten Richtung im wesentlichen senkrecht orientiert ist, unter der Aktuierung durch eine erste Antriebsrolle 23 um.

Jede erste Antriebsrolle wird mittels eines eigenen Antriebs aktuiert, der im Ausführungsbeispiel als Hydraulikmotor 26 ausgebildet ist. Dieser treibt die erste Antriebsrolle 23 über einen Zugriemen 24 an.

Jede Bandeinheit umfasst weiter ein zweites Endlos- oder Supportband 21, welches an der Bandeinheit parallel zum ersten Endlosband angeordnet ist und durch eine zweite Antriebsrolle 28 in der zweiten Richtung angetrieben wird. Die zweite Antriebsrolle wird über ein Zugband 25 zusammen mit der ersten Antriebsrolle 23 durch den Antrieb 26 der Bandeinheit derart angetrieben, dass das erste und zweite Endlosband dieselbe Umlaufgeschwindigkeit aufweisen.

In einer nicht dargestellten Abwandlung des Ausführungsbeispiels können die erste und zweite Antriebsrolle 23, 28 auch zu einer gemeinsamen Antriebsrolle zusammengefasst sein.

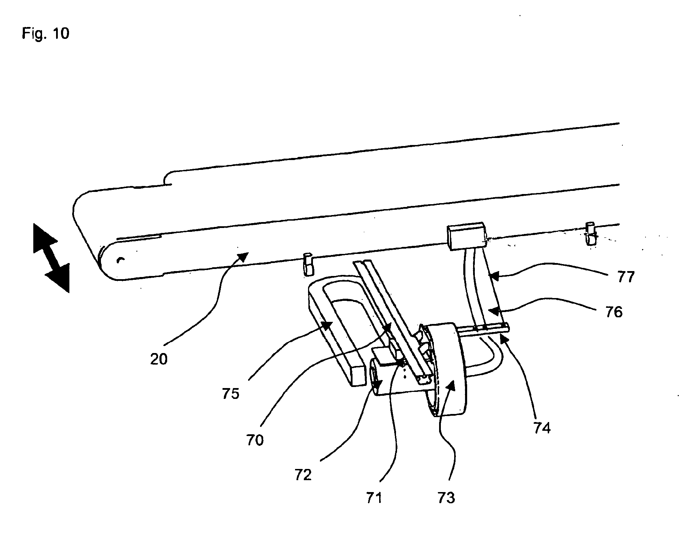

Die Tragstruktur umfasst eine in Fig. 10 näher dargestellte Linearführung 71, die in der ersten Richtung verschiebbar ist, und an der eine Endlos-Drehdurchführung 72 für die Energieversorgung eines damit verbundenen Antriebs einer Antriebsrolle angeordnet ist. Damit kann die Energie, beispielsweise elektrische Leistung oder Hydraulikdruck für die Elektro- oder Hydraulikmotoren 26 von einer inertial festen, beispielsweise mit dem Tragrahmen 11 verbundenen Energiequelle über eine flexible Leitung, die eine Bewegung in der ersten Richtung gestattet, der Linearführung 71 zugeführt und von dieser über die Endlos-Drehdurchführung 72 an einen Antriebsmotor 26 übertragen werden, der mit einer Schiene 74 fest oder über ein elastisches Bauelement, insbesondere eine Feder 77 verbunden ist, die ihrerseits fest oder lösbar mit der Endlos-Drehdurchführung 72 verbunden ist.

Wie in Fig. 4 erkennbar, in der die Bandeinheiten zur besseren Übersichtlichkeit ausgeblendet sind, umfasst die Tragstruktur eine Stützstruktur 17 zur Abstützung der Endlosbänder der Bandeinheiten derart, dass die Verbindung 74 (Fig. 10) zwischen der Endlosdrehdurchführung und des damit verbundenen Antriebs in der zweiten Richtung in etwa in der Mitte der zugehörigen Bandeinheit mit dieser Bandeinheit in der ersten Richtung mit umlaufen kann. Hierdurch können das erste und zweite Endlosband jeder Bandeinheit über weite Bereich abgestützt werden, was es gestattet, die in zwei Raumrichtungen bewegbaren Oberfläche soweit zu vergrößern, dass auch größere Bewegungen auf der Oberfläche möglich sind, beispielsweise ein Mensch darauf springen kann. Alternativ kann der schmale Bereich, der von der Stützstruktur 17 für die oben erläuterte Energiezufuhr freigelassen werden muss, auch in einem anderen Bereich, beispielsweise am Rand der Oberfläche vorgesehen sein.

Die Hydraulikmotoren 26 sind in Serie geschaltet, d.h., ausgehend von dem Hydraulikmotor, der mit der Schiene 74 verbunden ist und dem über die Linear- und Endlos-Drehdurchführung 72, 73 Hydraulikdruck zugeführt wird, wird dieser Hydraulikdruck über Hydraulikleitungen zwischen benachbarten Hydraulikmotoren sukzessive allen Hydraulikmotoren aller Bandeinheiten zugeführt. Dies gestattet eine sehr einfache und störungssichere Energieversorgung und minimiert die beweglichen Teile der Energiekette zwischen inertial fester Energiequelle und den in der ersten Richtung umlaufenden Antrieben. .

Wie insbesondere in Fign. 7 und 9 erkennbar, weist der Einlauf jeder Kette in das zugehörige Treibrad eine Führungsfläche 19 zur Führung der Kette auf, die im wesentlichen zwei linearen, im wesentlichen parallelen Abschnitten, zwei klotoiden Abschnitten 13 und ein Kreissegment derart umfasst, dass die Kette aus einem ersten linearen Abschnitt, in dem sie im wesentlichen in der ersten Richtung läuft, mit stetiger Krümmung in einen ersten klotoiden Abschnitt und von diesem mit stetiger Krümmung in das Kreissegment übergeht, aus diesem wiederum mit stetiger Krümmung in den zweiten klotoiden Abschnitt und von diesem mit stetiger Krümmung in den zweiten linearen Abschnitt übergeht. Dabei ist in den klotoiden Abschnitten das Produkt R(s)•s aus Krümmungsradius R(s) und Kurvenlänge s konstant, was einen stetigen Übergang des linearen Abschnittes (Krümmungsradius R(0) unendlich) am Kurvenanfang (Kurvenlänge s gleich Null) zu dem Kreissegment mit Krümmungs- bzw. Kreisradius RE ermöglicht und ein- und Auslaufstöße sowie den Polygoneffekt vermeidet.

Nachfolgend wird eine Ausführung der Erfindung entsprechend der einzelnen Baugruppen erläutert.

Der grundlegende Aufbau der Vorrichtung besteht, wie erläutert, aus dem Tragrahmen 11 mit einer Lauffläche, auf der sich die Bandeinheiten 20 bewegen und die im Bereich der Treibräder eine Führungsfläche 19 umfasst. Die Vorrichtung lässt sich in zwei Funktionsbereiche aufteilen: Tragrahmen mit Hauptantrieb (11 - 19) und Bandeinheiten (20-41).

Der Hauptantrieb treibt mit insgesamt vier Motoren M10, M20, M11, M21 die Antriebsketten 16 an. An diesen Antriebsketten 16 sind durch die Haltebügel 43 die Bandeinheiten 20 befestigt. Jede Bandeinheit selbst besteht aus zwei Bändern 21 und 22, die über den gemeinsamen Motor 26 angetrieben werden.

### Aufbau der Bandeinheiten

In Fig. 5 ist der Aufbau der Bandeinheit dargestellt. Das erste oder Hauptband 22 ist dabei teilweise ausgeblendet, um das Innenleben zu zeigen. Das Hauptband 22 wird von einer Antriebsrolle 23 angetrieben, das zweite oder Supportband 21 von der Umlenkrolle 28. Das Supportband 21 besitzt dabei eine deutlich geringere Bauhöhe als das Hauptband 22. Zudem ist das Supportband 21 so ausgeführt, dass es an der Außenseite des Rahmens 33 bündig abschließt. Sobald mehrer Bandsegmente 20 nebeneinander angeordnet werden entsteht eine geschlossene Fläche aus Bändern 22, 21. Die Umlenkrollen 23 und 28 sind durch die Antriebselemente 24 und 25 mit dem Antrieb 26 verbunden. Die Verbindung kann beispielsweise als Zahnriementrieb ausgeführt sein. Dabei ist die jeweilige Übersetzung so gewählt, dass sich die Bänder mit identischer Geschwindigkeit bewegen. Das Antriebselement 26 ist als leckagefreier Hydromotor ausgeführt.
Bei einer Anordnung mehrerer Bandeinheiten 20 kann durch eine Seriellschaltung der Antriebselemente 26 ein exakter Gleichlauf erzielt werden.

Zur vorteilhaften Steuerung des Motors kann zusätzlich ein proportionales Hydraulikventil 30 als Bypass eingesetzt werden, welches von einem Sensor 31 geschaltet wird. Sobald das Band auf der Kette 16 im Einlauf der Umlenkung 13 die waagerechte Lage auf der Oberseite der Vorrichtung verlässt wird der Bypass aktiviert, die Bänder 21, 22 kommen reibungsbedingt zum Stillstand. Dies verhindert eine Fehlfunktion ("Herauslaufen" der Bänder 21,22 aus der Führung) der Bandeinheit 20 z.B. beim Verharren in senkrechter Stellung an der Umlenkung bei gleichzeitigem Antrieb durch Motor 26.

Die Versorgung des Bandes erfolgt durch eine Energiezuführung. Diese ist derart gestaltet, dass die serielle Anordnung der Bandeinheiten 20 begünstigt wird. Die Zuführung der Energie erfolgt an einer Bandeinheit 20, die durch die flexible Zuführung 76 gespeist wird. Die Energie wird dann sukzessive in der Kette von Bandeinheiten 20 weitergeleitet, bis der Strang wieder die erste Bandeinheit 20 erreicht, welche je nach Medium die Rückleitung in den Energiestrang einbringt.

Zur Aufnahme von Querkräften ist das Band 21 und 22 mit geeigneten Führungselementen ausgestattet. Eine vorteilhafte Ausführung sind beispielsweise aufgeschweißte Trapezprofile auf der Unterseite des Bandes, die in passend geformten Nuten der Lauffläche gleiten.

Zur Verbesserung der räumlichen Ausdehnung des Bandes und der damit verbundenen dynamischen Eigenschaften ist das Antriebselement sowie die Ansteuerung weitgehend innerhalb des Bandkörpers angebracht.
Auf dem verbleibenden, freien Bereich unterhalb des Supportbandes sind in Abständen Abstützungen 27 angebracht, welche mit einer gelagerten Stützrolle 29 Kräfte aufnehmen können. Diese Stützen befinden sich - sobald die Bandeinheit 20 sich auf der Oberseite der Vorrichtung befindet- in Kontakt mit den Laufschienen 17 des Tragrahmens 11. Somit können nahezu beliebig große Kräfte von Objekten auf der Vorrichtung aufgenommen werden, ohne den Rahmen 33 der Bandeinheit verstärken zu müssen, was sich sehr günstig auf Gewicht und Dynamik der Vorrichtung auswirkt. Zudem kann die Anordnung nahezu beliebig breit gebaut werden.

Der Bypass des Antriebsmotors 26 kann zudem sehr vorteilhaft gestaltet werden, was sich erheblich auf Kosten und Betriebssicherheit auswirkt. In der vorgeschlagenen vorteilhaften Anordnung, die in Fig. 8 dargestellt ist, wird der Bypass durch einen Sensor 60 aktiviert. Dieser kann beispielsweise als Rollenhebelventil ausgeführt sein. Sobald der Sensor aktiviert ist, strömt ein Fluid in den Kolben 62, der in seiner Verfahrgeschwindigkeit durch einstellbare Drosselrückschlagventile 61 begrenzt wird. Der Kolben betätigt ein Hydraulikventil 63, welches einen zum Betätigungsweg proportionalen Öffnungsgrad hat. Auf diese Weise wird nach einem Schaltvorgang des Sensors der Bypass mit einstellbarer Geschwindigkeit geöffnet bzw. geschlossen, wobei die Öffnungs- und Schließzeiten unabhängig voneinander einstellbar sind. Daraus resultiert ein glatter Verlauf des Leitungsdrucks ohne Druckstöße, was zu einer konstanten Geschwindigkeit aller Bandeinheiten 20 führt.

### Der Hauptantriebsstrang

Die Bandeinheiten 20 sind über je einen Haltebügel 43 mit dem Hauptantriebsstrang 16 verbunden. Der Hauptantriebsstrang 16 ist aufgebaut aus den Innengliedern 45 und Aussengliedern 44, die über Bolzen 46 beweglich befestigt sind. Auf dem Bolzen 46 sind Laufräder 41 montiert, die auf einer Lauffläche mit Umlenkung abrollen. Auf einem Gliedpaar (44 und/oder 45) ist der Haltebügel 43 für die Bandsegmente 20 montiert. Der Hauptantriebsstrang 16 wird durch ein Segmentrad 18 angetrieben, welches auf der Innenseite zwischen einem Gliedpaar 45 in die Bolzen 46 greift. Das Segmentrad ist dabei vorteilhafterweise derart gestaltet, dass der Formschluss des Bolzens 46 mit dem Rad 18 nach erfolgtem Eingriff ideal ist (exakte Passung, Härtung des Segmentrades 18) und der Hauptantriebsstrang 16 durch eine Schräge an der Außenseite der Zahnflanken des Segmentrades 18 automatisch zentriert wird.

Zur Vermeidung des bekannten Polygoneffektes bei Kettenrändern v.a. bei großen Teilungen wird der Einlauf 19 besonders gestaltet. Dies dient zudem zur Verhinderung des sogenannten Peitscheneffektes, bei dem die Bandsegmente 20 bei einem Sprung in der Krümmung des Laufbandes dazu tendieren, an das benachbarte Bandsegment 20 zu stossen. Der Übergang 19 von der Lauffläche auf die Umlenkung erfolgt mit stetiger Krümmung. Der Begin der Umlenkung ist dabei vorteilhafterweise als Klotoide 13 ausgeführt. Auf diese Weise wird ein Beschleunigungssprung vermieden und die Bandeinheiten 20 separieren sich stoßfrei. Sobald die Klotoide die identische Steigung und Krümmung des korrespondierenden Kreisbogens des Polygonrades 18 aufweist, geht die Umlenkung 13 von der klotoiden Form auf die Kreisbahn über. Mit Beginn der Kreisbahn ist zudem der vollständige Kontakt eines Bolzens 46 mit dem Polygonrad 18 hergestellt. Der Auslauf ist ebenso wie der Einlauf gestaltet. Mit dem Übergang von der Kreisbahn zur klotoiden Form separiert sich der Bolzen 46 vom Polygonrad 18. Das Bandsegment 20 wird in der Folge in der Rotation um seine Längsachse stetig abgebremst und legt sich schließlich am Übergang zur linearen Lauffläche 19 stoßfrei an das vorauseilende Bandsegment 20 an.

Ein exakter Gleichlauf der zwei Hauptantriebsstränge 16 ist besonders vorteilhaft, da anderenfalls die komplette Vorrichtung zerstört werden kann. Zu diesem Zweck ist jeder der zwei Hauptantriebsstränge 16 mit je zwei Antriebselementen M10, M11 bzw. M20, M21 ausgestattet. Vorteilhaft sind diese Antriebselemente als Elektromotor mit Getriebe und Steuerung ausgebildet.

Für eine Bewegung der Hauptantriebsstränge 16 in Richtung der Antriebe M10, M20 ist folgende Steuerung vorgesehen: M10 und M20 werden winkelsynchron gesteuert und durch Drehgeber in einem geschlossen Regelkreis von der Steuerung in exaktem Gleichlauf gehalten. Die Motoren der Gegenseite M11 und M21 werden mit einem konstanten Moment in Laufrichtung beaufschlagt, welches ausreicht um Motor und Getriebe selbst zu bewegen, nicht jedoch um auf den Hauptantriebsstrang relevante Kräfte auszuüben. Dies dient dazu die Motoren M11 und M21 nicht durch die Hauptantriebsstränge 16 schleppen zu lassen, was zu erhöhtem Verschleiß und Zerstörung führen würde. Die Bewegung in die Gegenrichtung erfolgt analog nur mit vertauschten Motoren M10→M11 und M20 → M21. Zum Abbremsen der Vorrichtung wird die Bremskraft von den Antriebsmotoren aufgebracht, die denen der für die Beschleunigung erforderlichen gegenüber liegen. Wurde beispielsweise wie gezeigt mit M10, M20 angetrieben, so wird nun von M11, M21 die Bremskraft aufgebracht. M10, M20 werden wieder mit einem konstanten Moment ein Laufrichtung beaufschlagt um zu verhindern, dass Getriebe und Motor M11, M21 vom Hauptantriebsstrang 16 durch die Trägheit der bewegten Masse ähnlich einem Generator angetrieben werden. Die Bremskraft ist dabei entsprechend höher als das Moment an M11, M21.

Wie in Fig. 4 dargestellt, erfolgt die Energiezuführung zu einem Bandsegment 20 im Inneren der Tragstruktur 11. Das Bandsegment 20, an dem die Energie eingespeist wird übernimmt die Weiterleitung an andere Bandsegmente. Die Anordnung von Element 14 erfolgt mit dem in Figur 10 dargestellten Aufbau. Auf einer Schiene 70, welche fest mit der Tragstruktur 11 im Inneren der Bänderkette verbunden ist gleitet eine Linearführung 71. Auf dieser Linearführung ist eine Drehdurchführung 72 befestigt, die die Energie auf das endlos drehbare Element 73 überträgt. Die Drehdurchführung wird von der Energiekette 75, welche am anderen Ende mit dem Tragrahmen 11 verbunden ist, versorgt. In diesem Element kann je nach Erfordernis zusätzlich zu den in 72 übertragenen Energien Vakuum durchgeführt werden, welches beispielsweise zu einer Fixierung der Bänder auf 22 auf der Unterlage verwendet werden kann. An einer Schiene 74 erfolgt die Befestigung eines Zugelementes, welches beispielsweise eine Feder 77 zwischen der Schiene 74 und der Bandeinheit 20 ist. Zusätzlich sind an der Schiene 74 Energieführungselemente, also beispielsweise Hydraulikschläuche und Kabel befestigt.

Wird nun ein Bandsegment 20 bewegt so übt es über das oben genannte Zugelement zusätzlich zur Vorspannkraft eine zusätzliche Kraft auf die Schiene 74 aus. Um das entstehende Ungleichgewicht der Kräfte auszugleichen, bewegen sich die Elemente 71 bis 74 derart, dass wieder ein Gleichgewicht entsteht. Es wird damit sichergestellt, dass sich die Energiezuführung jederzeit in einer idealen Position befindet.

Alternativ kann die Energiezuführung auch ohne die Linearführung 70, 71 und Energiekette 75 erfolgen, in diesem Fall wird die Drehdurchführung mittig in der Tragstruktur 11 verbaut. Element 73 wird als Trommel ausgeführt, von welcher aus eine lange Energiekette zu dem Bandsegment 20 führt. Die Trommel 73 wird durch ein geeignetes Antriebselement mit konstantem Moment vorgespannt und sorgt dafür, dass die Energiekette von Element 74 zu Element 20 stets gespannt ist und keinen unzulässigen Kontakt zu den Bändern hat.

### Tragstruktur

Die Tragstruktur 11 ist derart gestaltet, dass sie die entstehenden Kräfte ideal aufnehmen kann und zugleich eine Energiezufuhr ermöglicht. Fig. 1 zeigt die Anordnung der tragenden Elemente. Dabei sind Tragsegmente 11a über Verbinder 11 b fixiert. Verstrebungen 11 c sorgen für die notwendige Stabilität. Das System ist dabei modular aufgebaut und kenn schnell zerlegt werden, was einen mobilen Einsatz begünstigt.

Fig. 4 zeigt die Tragstruktur in der Vorderansicht ohne Hauptantriebskette 16 und Bandsegmente 20. Die an den Bandsegmenten auftretenden Lasten werden über die Elemente 17 und 19 aufgenommen. Der Kragarm des Elements 11a bleibt dabei so kurz wie möglich. Zudem entsteht die größte Belastung im Bereich der Führungsschienen 19, welche direkt in die stabilen senkrechten Träger von 11a eingeleitet wird. Gleichzeitig bleibt durch die Öffnung auf der Oberseite zweier verbundener Elemente 11a genügend Raum zur Durchführung der Energiekette.

Die Rückführung der Bandsegmente 20 erfolgt im Inneren der Tragsegmente 11a.

## Patentansprüche

1. Vorrichtung mit einer in zwei Raumrichtungen bewegbaren Oberfläche, die umfasst:
einen Tragrahmen (11);
ein Fördermittel (16), welches an dem Tragrahmen in einer ersten Richtung umlaufend angeordnet ist;
eine Mehrzahl von Bandeinheiten (20),
wobei jede Bandeinheit am Fördermittel derart befestigbar ist, dass sie in der ersten Richtung bewegbar ist, und wobei jede Bandeinheit umfasst:
ein erstes Endlosband (22), welches an der Bandeinheit in einer zweiten Richtung umlaufend angeordnet ist; und
eine erste Antriebsrolle (23) zum Antreiben des ersten Endlosbandes in der zweiten Richtung;
wobei jede erste Antriebsrolle mittels eines eigenen Antriebs (26) aktuiert wird; **dadurch gekennzeichnet, dass** jede Bandeinheit weiter ein zweites Endlosband (21), welches an der Bandeinheit parallel zum ersten Endlosband angeordnet ist, aufweist.

2. Vorrichtung nach Anspruch 1, **dadurch gekennzeichnet, dass** das zweite Endlosband flacher und/oder kürzer als das erste Endlosband ist.

3. Vorrichtung nach einem der vorhergehenden Ansprüche, **dadurch gekennzeichnet, dass** jede Bandeinheit weiter eine zweite Antriebsrolle (28) zum Antreiben des zweiten Endlosbandes in der zweiten Richtung aufweist.

4. Vorrichtung nach einem der Ansprüche 1 oder 2, **dadurch gekennzeichnet, dass** das erste und zweite Endlosband durch dieselbe Antriebsrolle antreibbar sind.

5. Vorrichtung nach einem der vorhergehenden Ansprüche, **dadurch gekennzeichnet, dass** die Antriebe der ersten Antriebsrollen in Serie geschaltet sind.

6. Vorrichtung nach einem der vorhergehenden Ansprüche, **dadurch gekennzeichnet, dass** die Antriebe der Antriebsrollen Hydraulikmotoren und/oder Elektromotoren umfassen.

7. Vorrichtung nach einem der vorhergehenden Ansprüche, **dadurch gekennzeichnet, dass** die Tragstruktur eine Linearführung (71) umfasst, die in der ersten Richtung verschiebbar ist, und an der eine EndlosDrehdurchführung (72) für die Energieversorgung eines damit verbundenen Antriebs einer Antriebsrolle angeordnet ist.

8. Vorrichtung nach Anspruch 7, **dadurch gekennzeichnet, dass** die Tragstruktur eine Stützstruktur (17) zur Abstützung der Endlosbänder der Bandeinheiten derart umfasst, dass eine Verbindung (74) zwischen der Endlosdrehdurchführung und des damit verbundenen Antriebs in der zweiten Richtung in etwa in der Mitte der zugehörigen Bandeinheit mit dieser Bandeinheit in der ersten Richtung mit umlaufen kann.

9. Vorrichtung nach einem der vorhergehenden Ansprüche, **dadurch gekennzeichnet, dass** das Fördermittel zwei umlaufende Ketten (16) umfasst, welche durch je wenigstens ein Treibrad (18) in der ersten Richtung umlaufen.

10. Vorrichtung nach Anspruch 9, **dadurch gekennzeichnet, dass** der Einlauf jeder Kette in das zugehörige Treibrad eine Führungsfläche zur Führung der Kette aufweist, die im wesentlichen zwei linearen im wesentlichen parallelen Abschnitten, zwei klotoiden Abschnitten und einem Kreissegment derart umfasst, dass die Kette aus einem ersten linearen Abschnitt, in dem sie im wesentlichen in der ersten Richtung läuft, mit stetiger Krümmung in einen ersten klotoiden Abschnitt und von diesem mit stetiger Krümmung in das Kreissegment übergeht, aus diesem wiederum mit stetiger Krümmung in den zweiten klotoiden Abschnitt und von diesem mit stetiger Krümmung in den zweiten linearen Abschnitt übergeht.

11. Vorrichtung nach Anspruch 9 oder 10, **dadurch gekennzeichnet, dass** jede Kette durch ein erstes und ein zweites Treibrad aktuierbar ist, wobei die ersten und/oder zweiten Treibräder beider Ketten jeweils winkelsynchron gesteuert werden.

12. Vorrichtung nach einem der Ansprüche 9 bis 11, **dadurch gekennzeichnet, dass** wenigstens ein Treibrad ein Polygonrad ist, welches formschlüssig mit Bolzen (46) der jeweiligen Kette in Eingriff treten kann.

13. Vorrichtung nach einem der vorhergehenden Ansprüche, **dadurch gekennzeichnet, dass** die zweite Antriebsrolle zusammen mit der ersten Antriebsrolle durch den Antrieb der Bandeinheit derart umläuft, dass das erste und zweite Endlosband dieselbe Umlaufgeschwindigkeit aufweisen.

14. Vorrichtung nach einem der vorhergehenden Ansprüche, **dadurch gekennzeichnet, dass** jede Bandeinheit ein Anziehmittel umfasst, welches das Endlosband an eine Tragstruktur der Bandbeinheit zieht.

15. Vorrichtung nach Anspruch 12, **dadurch gekennzeichnet, dass** das Anziehmittel einen Magneten, insbesondere einen Elektromagneten, und/oder eine Vakuumvorrichtung umfasst.

## Claims

1. A device having a surface displaceable in two spatial directions, comprising:
a carrier frame (11);
a conveyor means (16) disposed at the carrier frame revolving in a first direction;
a plurality of belt units (20),
each belt unit being fastenable to the conveyor means in such a way that it is displaceable in the first direction, and each belt unit comprising:
a first continuous belt (22) that is disposed at the belt unit revolving in a second direction; and a first driving roller (23) for driving the first
continuous belt in the second direction;
each first driving roller being actuated by a dedicated drive (26); **characterized in that** each belt unit additionally has a second continuous belt (21) that is situated on the belt unit parallel to the first continuous belt.

2. The device as recited in Claim 1, **characterized in that** the second continuous belt is flatter and/or shorter than the first continuous belt.

3. The device as recited in one of the preceding claims, **characterized in that** each belt unit additionally has a second driving roller (28) for driving the second continuous belt in the second direction.

4. The device as recited in one of Claims 1 or 2, **characterized in that** the first and second continuous belt are drivable by the same driving roller.

5. The device as recited in one of the preceding claims, **characterized in that** the drives of the first driving rollers are connected in series.

6. The device as recited in one of the preceding claims, **characterized in that** the drives of the driving rollers comprise hydraulic motors and/or electric motors.

7. The device as recited in one of the preceding claims, **characterized in that** the carrier structure comprises a linear guide (71) that is displaceable in the first direction and on which there is situated an endless rotating feedthrough (72) for supplying energy to a drive, connected thereto, of a driving roller.

8. The device as recited in Claim 7, **characterized in that** the carrier structure comprises a support structure (17) for supporting the continuous belts of the belt units, such that a connection (74) between the endless rotating feedthrough and the drive connected thereto in the second direction, approximately in the center of the appertaining belt unit, can circulate together with this belt unit in the first direction.

9. The device as recited in one of the preceding claims, **characterized in that** the conveyor means comprises two circulating chains (16) that circulate in the first direction, driven by at least one drive wheel (18) per chain.

10. The device as recited in Claim 9, **characterized in that** the run-in of each chain to the associated drive wheel has a guide surface for guiding the chain, comprising essentially two linear segments that are essentially parallel, two clothoidal segments, and a circular segment, in such a way that the chain goes from a first linear segment, in which it runs essentially in the first direction, with constant curvature into a first clothoidal segment, and from here goes with constant curvature into the circular segment, and then goes from here with constant curvature into the second clothoidal segment, and from this segment goes with constant curvature into the second linear segment.

11. The device as recited in Claim 9 or 10, **characterized in that** each chain can be actuated by a first and second drive wheel, the first and/or second drive wheels of both chains each being controlled with angular synchronism.

12. The device as recited in one of Claims 9 to 11, **characterized in that** at least one drive wheel is a polygonal wheel that can enter into positive engagement with bolts (46) of the respective chain.

13. The device as recited in one of the preceding claims, **characterized in that** the second driving roller, together with the first driving roller, is made to circulate by the drive of the belt unit in such a way that the first and second continuous belt have the same circulation speed.

14. The device as recited in one of the preceding claims, **characterized in that** each belt unit comprises a traction means that pulls the continuous belt to a carrier structure of the belt unit.

15. The device as recited in Claim 12, **characterized in that** the traction means comprises a magnet, in particular an electromagnet, and/or a vacuum device.

## Revendications

1. Dispositif présentant une surface pouvant être déplacée dans deux directions spatiales, qui comprend :
un châssis de support (11) ;
un moyen de transport (16) qui est agencé en révolution dans une première direction sur le châssis de support ;
une pluralité d'unités à bandes (20), chaque unité à bandes pouvant être fixée sur le moyen de transport de façon à être mobile dans la première direction, et chaque unité à bandes comprenant :
une première bande sans fin (22), qui est agencée en révolution dans une deuxième direction sur l'unité à bandes ; et
un premier rouleau d'entraînement (23) destiné à entraîner la première bande sans fin dans la
deuxième direction ;
chaque premier rouleau d'entraînement étant actionné à l'aide d'un moyen d'entrainement (26) lui étant propre ; **caractérisé en ce que** chaque unité à bandes comporte par ailleurs une deuxième bande sans fin (21), qui est agencée sur l'unité à bandes, parallèlement à la première bande sans fin.

2. Dispositif selon la revendication 1, **caractérisé en ce que** la deuxième bande sans fin est plus plate et/ou plus courte que la première bande sans fin.

3. Dispositif selon l'une des revendications précédentes, **caractérisé en ce que** chaque unité à bandes comprend par ailleurs un deuxième rouleau d'entraînement (28) pour entraîner la deuxième bande sans fin dans la deuxième direction.

4. Dispositif selon l'une des revendications 1 ou 2, **caractérisé en ce que** la première et la deuxième bande sans fin peuvent être entraînées par le même rouleau d'entraînement.

5. Dispositif selon l'une des revendications précédentes, **caractérisé en ce que** les moyens d'entraînement des premiers rouleaux d'entraînement sont commutés en série.

6. Dispositif selon l'une des revendications précédentes, **caractérisé en ce que** les moyens d'entraînement des rouleaux d'entraînement comprennent des moteurs hydrauliques et/ou des moteurs électriques.

7. Dispositif selon l'une des revendications précédentes, **caractérisé en ce que** la structure de support comprend un guidage linéaire (71) qui peut coulisser dans la première direction et sur lequel est agencé un passage tournant (72) sans fin pour l'alimentation en énergie d'un moyen d'entraînement de rouleau d'entraînement, qui y est relié.

8. Dispositif selon la revendication 7, **caractérisé en ce que** la structure de support comprend une structure de soutien (17) destiné à soutenir les bandes sans fin des unités à bandes, de façon telle qu'une liaison de connexion (74) entre le passage tournant sans fin et le moyen d'entraînement dans la deuxième direction, qui y est relié, puisse tourner en révolution dans la première direction avec l'unité à bandes associée, environ au milieu de cette unité à bandes.

9. Dispositif selon l'une des revendications précédentes, **caractérisé en ce que** le moyen de transport comprend deux chaînes (16) en révolution, qui tournent en révolution dans la première direction, chacune par l'intermédiaire d'au moins une roue motrice (18).

10. Dispositif selon la revendication 9, **caractérisé en ce que** l'entrée de chaque chaîne dans la roue motrice associée présente une surface de guidage pour guider la chaîne, qui comprend essentiellement deux tronçons linéaires sensiblement parallèles, deux tronçons de clothoïde et un segment circulaire, de façon telle que la chaîne passe d'un premier tronçon linéaire, dans lequel elle circule sensiblement dans la première direction, avec une courbure continue, vers un premier tronçon de clothoïde, et de celui-ci, avec une courbure continue, vers le segment circulaire, puis passe de celui-ci, à nouveau avec une courbure continue, vers le deuxième tronçon de clothoïde, et de celui-ci, avec une courbure continue, vers le deuxième tronçon linéaire.

11. Dispositif selon la revendication 9 ou la revendication 10, **caractérisé en ce que** chaque chaîne peut être actionnée par une première et une deuxième roue motrice, les premières et/ou les deuxièmes roues motrices des deux chaînes étant commandées respectivement de manière à être angulairement synchronisées.

12. Dispositif selon l'une des revendications 9 à 11, **caractérisé en ce qu'**au moins une roue motrice est une roue polygonale, qui peut entrer en prise, par complémentarité de formes, avec des axes (46) de la chaîne respective.

13. Dispositif selon l'une des revendications précédentes, **caractérisé en ce que** le deuxième rouleau d'entraînement tourne en révolution avec le premier rouleau d'entraînement par l'intermédiaire du moyen d'entraînement de l'unité à bandes, de façon telle que la première et la deuxième bande sans fin présentent la même vitesse périphérique.

14. Dispositif selon l'une des revendications précédentes, **caractérisé en ce que** chaque unité à bandes comporte un moyen d'attraction, qui attire la bande sans fin contre une structure de support de l'unité à bandes.

15. Dispositif selon la revendication 12, **caractérisé en ce que** le moyen d'attraction comprend un aimant, notamment un électroaimant et/ou un dispositif à vide.
